# EUROPÄISCHE PATENTSCHRIFT

(11) **EP 4 054 882 B1**
(45) Veröffentlichungstag und Bekanntmachung des Hinweises auf die Patenterteilung: **06.11.2024**
(21) Anmeldenummer: 20800920.9
(22) Anmeldetag: 04.11.2020
(51) Int. Cl.: B60L 53/14, B60L 53/16, B60L 53/22, B60L 53/35

(54) **SYSTEM ZUM KONDUKTIVEN LADEN EINES KRAFTFAHRZEUGS**
SYSTEM FOR CONDUCTIVELY CHARGING A MOTOR VEHICLE
SYSTÈME DE CHARGE CONDUCTRICE D'UN VÉHICULE AUTOMOBILE

(30) Priorität: 07.11.2019 DE 102019007712
(43) Veröffentlichungstag der Anmeldung: 14.09.2022
(73) Patentinhaber: KOSTAL Automobil Elektrik GmbH & Co. KG, 58513 Lüdenscheid (DE)
(72) Erfinder: LENKENHOFF, Christian, 58332 Schwelm (DE); HIRSCHFELD, Klaus, 58515 Lüdenscheid (DE); SCHRÖDER, Georg, 57489 Drolshagen (DE); PERLICK, Robin, 58791 Werdohl (DE); RILLING, Herwig, 59174 Kamen (DE); PITZUL, Uwe, 58093 Hagen (DE); KÖNIG, Christina, 58097 Hagen (DE)
(74) Vertreter: Kerkmann, Detlef
(86) Internationale Anmeldenummer: PCT/EP2020/080912
(87) Internationale Veröffentlichungsnummer: WO 2021/089592

(56) Entgegenhaltungen:
- EP-A1- 2 928 023
- DE-A1- 102017 115 224
- DE-A1- 102018 205 594
- DE-A1- 102019 000 151

## Beschreibung

Die Erfindung betrifft ein System zum konduktiven Laden eines Kraftfahrzeugs, aufweisend eine Ladevorrichtung mit einer als Scherentisch ausgebildeten motorisch verstellbaren Hubeinrichtung, die eine elektrische Kontaktierungseinheit vertikal positionieren kann, und eine an einem Kraftfahrzeug angeordnete Aufnahmevorrichtung für die Kontaktierungseinheit.

Die Thematik des automatisierten Ladens von elektrisch angetriebenen Kraftfahrzeugen beschäftigt bereits seit einigen Jahren die Fachwelt, denn der Nutzerkomfort beim manuellen Hantieren mit einem unhandlichen und schmutzigen Kabel ist nicht besonders hoch. Von Seiten diverser Hochschulen gibt es bereits seit einigen Jahren Vorschläge, die das Problem lösen, indem eine handelsübliche Ladesäule inklusive Stecker mit einem mehrachsigen Roboter kombiniert wird, der die Aufgabe des Steckens des Ladesteckers übernimmt. Diese Lösungen sind aber allenfalls für große Flotten interessant, für den Endnutzer sind sie schlicht zu kompliziert und zu teuer.

Des Weiteren gibt es seit einigen Jahren Ansätze, die Energieübertragung induktiv zu auszuführen; dies hat sich aber aufgrund von Sicherheitsbedenken beziehungsweise hohem Aufwand und hoher Kosten bisher nicht durchgesetzt. Allgemein scheint der Trend in Richtung des konduktiven Ladens zu gehen.

Aus der deutschen Offenlegungsschrift DE 10 2019 000 151 A1 ist eine gattungsgemäße Ladevorrichtung bekannt, die ein Kontaktelement aufweist, welches auf der beweglichen Plattform eines motorisch verstellbaren Scherentischs angeordnet ist und durch den Scherentisch vertikal positioniert werden kann.

Nachteilig an dieser vorbekannten Ladevorrichtung ist, dass das Kontaktelement offen angeordnet ist, und dadurch gegenüber Umwelteinflüssen und insbesondere Verschmutzungen empfindlich ist. Hierdurch kann die Funktionsfähigkeit des elektrischen Kontaktelements beeinträchtigt werden.

Ein zusätzliches Problem kann im Falle eines Stromausfalls auftreten. Die durch die Ladevorrichtung miteinander verbundenen Kontaktelemente der Ladevorrichtung und des Kraftfahrzeugs bleiben nach einem Stromausfall auch weiterhin mechanisch verbunden. In diesem Fall ist ein Wegfahren des Kraftfahrzeugs nicht möglich oder zumindest erschwert, da hierbei die Gefahr besteht, die elektrischen Kontaktelemente zu beschädigen.

Aus der deutschen Offenlegungsschrift DE 10 2018 205 594 A1 ist ein Kraftfahrzeug mit einer elektrischen Kontaktierungseinheit bekannt, wobei die Kontaktierungseinheit konisch ausgebildet ist, und an ihrer Mantelfläche umlaufend mehrere Kontaktringe aufweist, wobei die Aufnahmevorrichtung eine Aufnahmekammer für die Kontaktierungseinheit aufweist, und wobei die Aufnahmevorrichtung um die Aufnahmekammer herum mehrere radial positionierbare Kontaktkörper aufweist, die in einer Position die Kontaktringe der in der Aufnahmekammer eingefügten Kontaktierungseinheit elektrisch kontaktieren und zugleich die Kontaktierungseinheit innerhalb der Aufnahmekammer mechanisch an der Aufnahmevorrichtung fixieren, wobei die Position der Kontaktkörper von einer fahrzeugseitigen Steuervorrichtung gesteuert wird, und wobei die Ladevorrichtung Mittel aufweist, durch die sie die in der Aufnahmevorrichtung fixierte Kontaktierungseinheit in axialer Richtung mechanisch vorspannen kann.

Es stellte sich die Aufgabe, eine gattungsgemäße konduktive Ladevorrichtung zu schaffen, die einen Kontakt einfach und zuverlässig herstellen kann.

Diese Aufgabe wird erfindungsgemäß jeweils durch die Kombination der kennzeichnenden Merkmale der Ansprüche 1, 2 und 3 gelöst.

Erfindungsgemäß ist eine im Wesentlichen zylinderförmige oder kegelstumpfförmige Kontaktierungseinheit vorgesehen, die von einer als Scherentisch ausgebildeten motorisch verstellbare Hubeinrichtung unter einem Kraftfahrzeug angehoben wird, bis die Kontaktierungseinheit in eine Aufnahmekammer einer Aufnahmevorrichtung einfährt, welche an der Unterseite eines Kraftfahrzeugs angeordnet ist.

Des Weiteren ist vorgesehen, dass die Aufnahmevorrichtung um die Aufnahmekammer herum mehrere radial positionierbare Kontaktkörper aufweist, die in einer Positionierstellung die Kontaktringe einer in die Aufnahmekammer eingefügten Kontaktierungseinheit elektrisch kontaktieren und die Kontaktierungseinheit innerhalb der Aufnahmekammer mechanisch an der Aufnahmevorrichtung fixieren. Die Position der Kontaktkörper wird durch eine kraftfahrzeugseitige Steuervorrichtung gesteuert, so dass die Aufnahmevorrichtung beim mechanischen und elektrischen Verbinden und Trennen eine aktive Rolle spielt.

Vorgesehen ist auch, die elektrischen Kontaktelemente der Kontaktierungseinheit als Kontaktringe aufzubauen und vertikal übereinander anzuordnen. Durch die rotationssymmetrische Anordnung der Kontaktringe ist beim Zusammenführen mit den Gegenkontaktelementen des Kraftfahrzeugs jede relative Drehstellung zwischen der Kontaktierungseinheit und dem Kraftfahrzeug zur Herstellung einer elektrischen Verbindung geeignet, so dass keine besondere rotatorische Ausrichtung zwischen der Ladevorrichtung und dem Kraftfahrzeug erforderlich ist.

Vorgesehen ist zudem, dass die Ladevorrichtung Mittel aufweist, durch die sie die in der Aufnahmevorrichtung fixierte Kontaktierungseinheit in axialer Richtung mechanisch vorspannen kann. Hierdurch gelingt es auch im Falle einer Störung oder eines Stromausfalls die Aufnahmevorrichtung von der Ladevorrichtung zu trennen.

Hierzu kann die Kontaktierungseinheit vorteilhaft über mindestens ein elastisches Element, wie beispielsweise eine oder mehrere Federn, mit der Hubeinrichtung verbunden sein. Ebenfalls vorteilhaft kann die mechanische Vorspannung durch ein mechanisches Entkoppeln eines Scherenhebels von einem den Scherentisch bewegenden Schlitten erzeugt werden.

Erfindungsgemäß kann erstens zusätzlich vorgesehen sein, dass die Aufnahmevorrichtung über mindestens zwei und vorzugsweise drei Kontaktkörper verfügt.

Erfindungsgemäß kann zweitens zusätzlich vorgesehen sein, dass die Kontaktkörper mechanisch mit einer elastischen Schlinge, die vorzugsweise durch einen federnden Metallstreifen ausgebildet ist, miteinander verbunden sind, die durch einen Antrieb geöffnet und geschlossen werden kann.

Erfindungsgemäß kann drittens zusätzlich vorgesehen sein, dass die Kontaktierungseinheit durch einen zumindest zeitweise mit den Scherenhebeln der Hubvorrichtung gekoppelten Schwenkhebel in Verbindung mit dem elastischen Element vorrauseilend gegenüber der Hubeinrichtung verfahrbar ist.

Besonders vorteilhaft kann dadurch beim Herunterfahren des Scherentischs die Kontaktierungseinheit auf einfache Weise in die Plattform des Scherentisches eingezogen werden. Hierdurch sind bei Nichtgebrauch des Ladesystems die Kontaktierungseinheit vor schädigenden Umwelteinflüssen geschützt angeordnet. Derselbe Schwenkhebel ermöglicht im Zusammenspiel mit den elastischen Elementen beim Heben des Scherentischs ein vorauseilendes Ausfahren der Kontaktierungseinheit und somit eine flache Bauweise des auf dem Boden angebrachten Systems.

Weitere vorteilhafte Ausgestaltungen und Weiterbildungen der Erfindung ergeben sich aus den abhängigen Ansprüchen und der nachfolgenden Beschreibung eines Ausführungsbeispiels.

Nachfolgend soll ein Ausführungsbeispiel der Erfindung anhand der Zeichnung dargestellt und erläutert werden. Es zeigen
- Figur 1: eine Ladevorrichtung in ihrer Ruheposition in einer teilweise geschnitten dargestellten Draufsicht,
- Figur 2: die Ladevorrichtung gemäß Figur 1 in einer Querschnittsansicht,
- Figur 3: die Ladevorrichtung mit einer teilweise ausgefahrenen Kontaktierungseinheit in einer teilweise geschnitten dargestellten Draufsicht,
- Figur 4: die Ladevorrichtung gemäß Figur 3 in einer Querschnittsansicht,
- Figur 5: die Ladevorrichtung mit komplett ausgefahrenem Scherentisch,
- Figur 6: die Ladevorrichtung gemäß Figur 5 in einer Querschnittsansicht,
- Figur 7: die Ladevorrichtung mit einer damit verbundenen fahrzeugseitigen Aufnahmevorrichtung in einer Draufsicht,
- Figur 8: eine mit einer Kontaktierungseinheit verbundene Aufnahmevorrichtung,
- Figur 9: eine Querschnittsansicht der fahrzeugseitigen Aufnahmevorrichtung,
- Figur 10: ein Längsschnitt durch die fahrzeugseitige Aufnahmevorrichtung,
- Figur 11: einen Querschnitt durch die Kontaktierungseinheit und die Aufnahmevorrichtung.

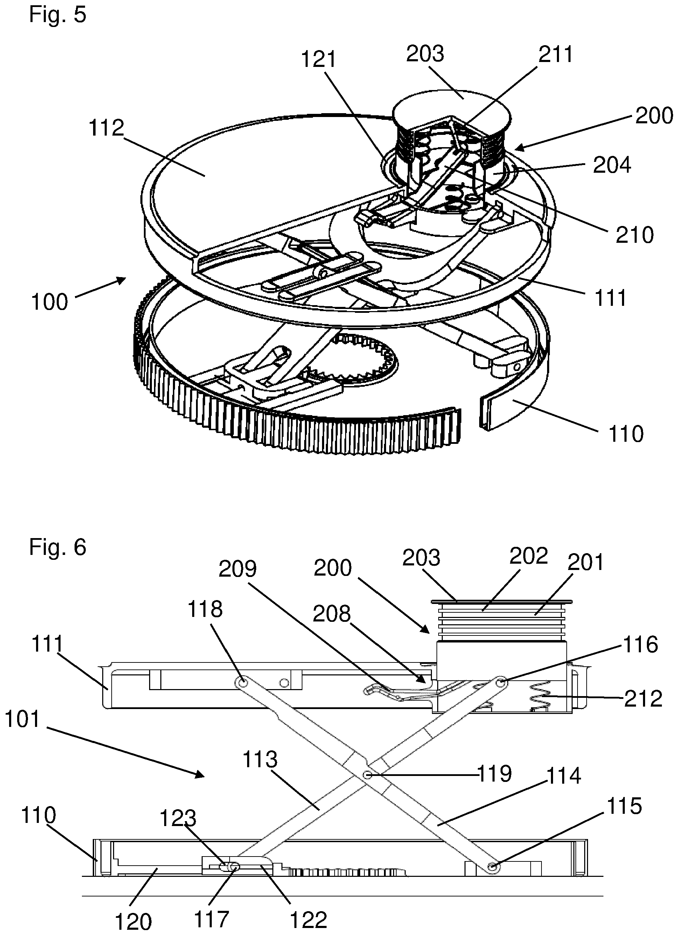

Der Aufbau einer Ladevorrichtung 100 ist besonders deutlich in den Figuren 5 und 6 erkennbar. Die Ladevorrichtung 100 besteht aus einer als Scherentisch 101 ausgebildeten Hubvorrichtung, und einer am Scherentisch 101 angeordneten und gegenüber dem Scherentisch 101 positionierbaren Kontaktierungseinheit 200. Die Kontaktierungseinheit 200 weist elektrische Kontaktelemente 201 auf.

Der hier dargestellte Scherentisch 101 besitzt einen kreisrunden Grundrahmen 110 und einen ebenfalls kreisrunden Oberrahmen 111, welcher eine ebene Plattform 112 ausbildet. An dem Grundrahmen 110 und dem Oberrahmen 111 befinden sich jeweils die beiden Lager zweier gleich langer Scherenhebel 113, 114. Jeweils in der Mitte ihrer Längserstreckungen sind die beiden Scherenhebel 113, 114 auf einer gemeinsamen Achse 119 gegeneinander drehbar angeordnet.

Die Scherenhebel 113, 114 sind sowohl am Grundrahmen 110 als auch am Oberrahmen 111 jeweils in einem Festlager 115, 116 und einem Loslager 117, 118 gelagert. Innerhalb der Loslager 117, 118 ist jeweils einer der Scherenhebel 113, 114 horizontal beweglich geführt. Dabei kann der im Loslager 117 des Grundrahmens 110 gelagerte Scherenhebel 113 über eine motorisch angetriebene Gewindespindel 120 horizontal verschoben werden. Dazu verfügt das untere Loslager 117 über einen Schlitten 122, in den ein Gewinde eingebracht ist. Dieses Gewinde läuft auf der Gewindespindel 120, die von einem hier nicht dargestellten Elektromotor angetrieben wird und verschiebt den Schlitten 122 dadurch mit hoher Kraft, wodurch der Elektromotor relativ klein dimensioniert sein kann.

Die hierdurch bewirkte Bewegung der Scherenhebel 113, 114 gegeneinander überträgt sich auch auf die Lagerstellen 116, 118 der Scherenhebel 113, 114 am Oberrahmen 111, wodurch der Oberrahmen 111 mit der Plattform 112 parallel zum Grundrahmen 110 angehoben oder abgesenkt werden kann. Die Plattform 112 weist eine kreisrunde Ausnehmung 121 auf, aus der eine Kontaktierungseinheit 200 ausfahren kann. Die Kontaktierungseinheit 200 weist einen im Wesentlichen zylinderförmigen Körper aus einem Isoliermaterial auf, an dessen Mantelfläche mehrere Kontaktringe 201 übereinander angeordnet sind. Die Kontaktringe 201 sind dazu vorgesehen, elektrische Verbindungen zu Gegenkontaktelementen an einem elektrisch angetriebenen Kraftfahrzeug herzustellen, um elektrische Energie, vorzugsweise zum Laden von Traktionsbatterien, auf das Kraftfahrzeug zu übertragen.

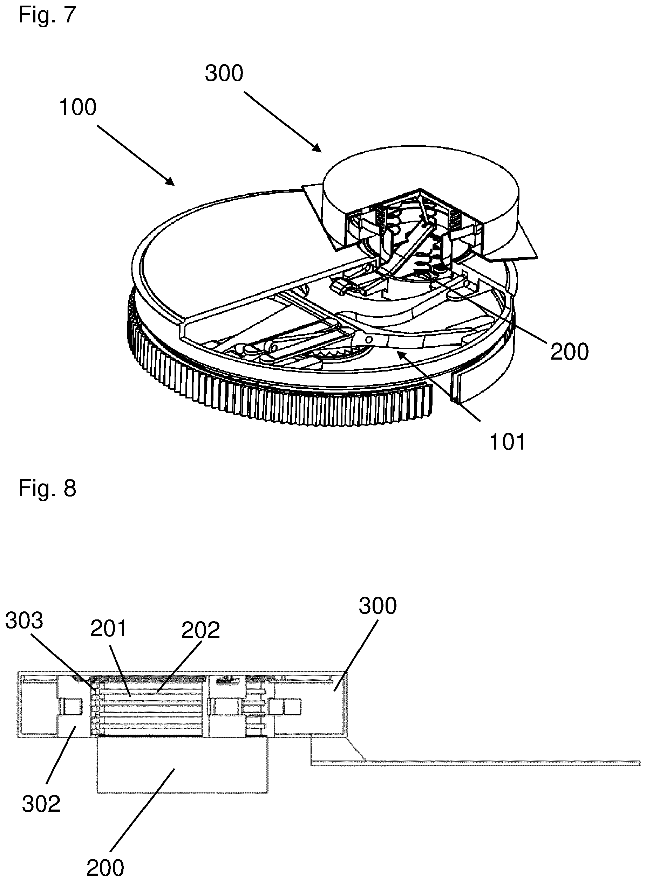

Der Grundkörper 204 verfügt über einen mit einem deckelartigen Balkon 203, der seitlich überstehend oberhalb der Kontaktringe 201 angeordnet ist, und der die Kontaktringe 201 vor Verschmutzungen schützt, während diese schon aus dem geschützten Bereich der Ladevorrichtung 100 herausgefahren, aber noch nicht innerhalb der kraftfahrzeugseitigen Aufnahmevorrichtung 300 (dargestellt in den Figuren 7 bis 11) eingeklinkt sind. Herabfallende Gegenstände, Regen, Schnee oder Staub fallen somit nicht auf die Kontaktringe 201 sondern höchstens auf die Kontaktierungseinheit 200 beziehungsweise an der Kontaktierungseinheit 200 vorbei, wo sie den Ladevorgang nicht stören.

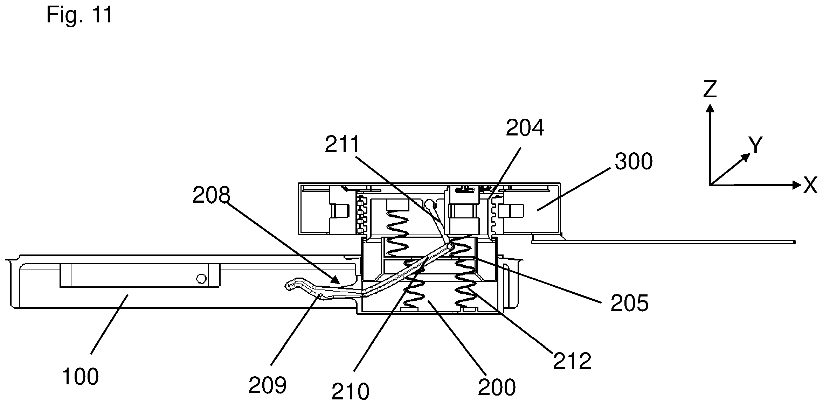

Der Grundkörper 204 ist, wie in der Figur 11 dargestellt, über mehrere Federn 212 mit dem Oberrahmen 111 der Ladevorrichtung verbunden. Die Position der Kontaktierungseinheit 200 relativ zur Plattform 112 wird über einen beweglich angeordneten Schwenkhebel 208 gesteuert, der zeitweise mit der Scherenhebelmechanik zusammenwirkt. Der Schwenkhebel 208 ist dazu verschwenkbar am Oberrahmen 111 der Ladevorrichtung 100 gelagert. Der längere Hebelarm 210 des Schwenkhebels 208 ist über einen beweglich angelenkten Koppelhebel 211 mit dem Grundkörper 204 der Kontaktierungseinheit 200 verbunden. Der Schwenkhebel 208 bewirkt insbesondere, dass bei einem Anheben des Scherentischs 101 aus seiner Grundstellung in der Ruheposition der Ladevorrichtung 100 der Kontaktierungseinheit 200 vorauseilend aus der Plattform 112 ausfährt und zusätzlich, dass das Anheben der Plattform 112 aus der kraftwirkend ungünstigen Grundstellung des Scherentischs 101 vereinfacht wird.

Vorteilhaft kann vorgesehen werden, dass der Grundrahmen 110 der Ladevorrichtung 100 in den Fußboden eines Gebäudes oder im Freien in den Erdboden eingelassen wird. Hierdurch ist die Ladevorrichtung 100 auch in den öffentlichen Raum integrierbar.

Zur Einleitung einer Energieübertragung wird die Kontaktierungseinheit 200 der Ladevorrichtung 100 an eine an einem Kraftfahrzeug angeordnete Aufnahmeeinheit 300 (dargestellt in den Figuren 7 bis 11) zunächst herangeführt und schließlich mit dieser mechanisch und elektrisch verbunden. Die vertikale Annäherung der Kontaktierungseinheit 200 an die Aufnahmevorrichtung 300 an der Bodenfläche des Kraftfahrzeugs wird, aufgrund des günstigen Verhältnisses zwischen flacher Ausgangsbauhöhe und maximal erreichbarer Arbeitshöhe vor allem durch eine Bewegung des Scherentischs 101 bewirkt.

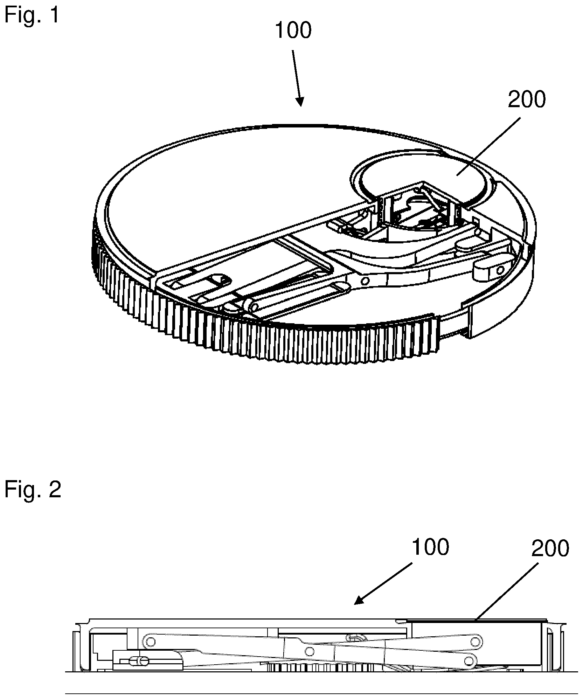

Verschiedene Stellpositionen der Ladevorrichtung 100, und speziell des Scherentischs 101 und der Kontaktierungseinheit 200 sind in den Figuren 1 bis 6 dargestellt.

Die Figuren 1 und 2 zeigen in zwei Darstellungen eine Ladevorrichtung 100 in ihrer Ruheposition. Die Plattform 112 des Scherentisches 101 und der Oberrahmen 111 liegen eng am Grundrahmen 110 an und die Kontaktierungseinheit 200 ist in den Oberrahmen 111 der Ladevorrichtung 100 eingefahren. Die Komponenten der Ladevorrichtung 100 sind so vor Verschmutzung und Beschädigung geschützt.

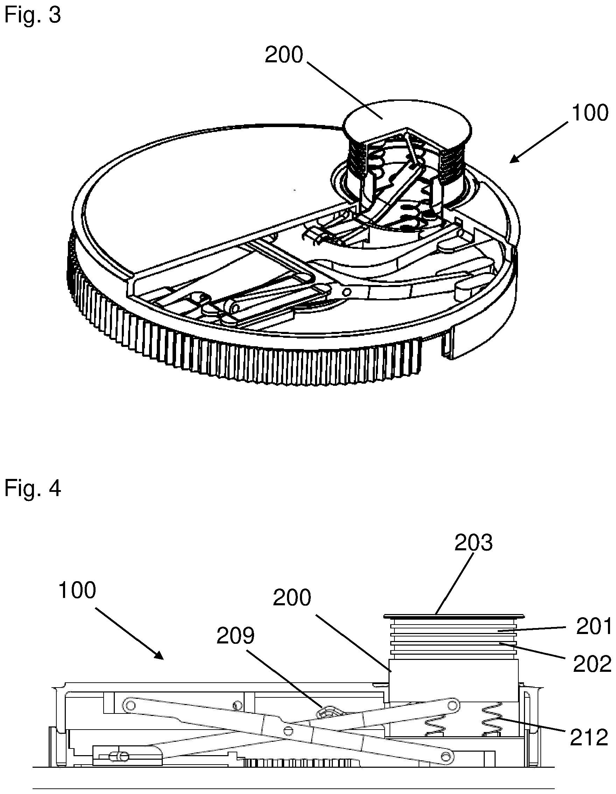

Die Figuren 3 und 4 zeigen eine zum Laden des Kraftfahrzeugs einsatzbereite Ladevorrichtung 100. Die Scherenhebel 113, 114 des Scherentischs 101 sind ein Stück weit aus ihrer Ruheposition herausbewegt, so dass die Plattform 112 des Scherentischs 101 ein Stück weit angehoben ist. In dieser Position des Scherentisches 101 ist die Kontaktierungseinheit 200 bereits vollständig aus dem Rahmen der Ladevorrichtung 100 herausgefahren, wobei der kürzere Hebelarm 209 des Schwenkhebels 208 gerade noch auf dem Scherenhebel 113 des Scherentischs 101 aufliegt.

In diesem Zustand herrscht ein Gleichgewicht zwischen Schwerkraft der Kontaktierungseinheit 200 und Federkraft der Federn 212. Es ist bei der Auslegung darauf zu achten, dass die Federkraft dieses Gleichgewicht möglichst genau dann erreicht, wenn der Scherentisch 101 optimal ausgefahren ist (das heißt, noch Reserven nach oben und nach unten für nachfolgende Bewegungen der Kontaktierungseinheit 200 hat). Wird der Scherentisch 101 nun weiter nach oben verfahren, verliert der kürzere Hebelarm 209 des Schwenkhebels 208 den Kontakt zum Gegenlager und verfährt einfach mit; wird der Scherentisch 101 hingegen nun nach unten verfahren, berührt der kürzere Hebelarm 209 die Auflagefläche des Scherenhebels 113 und die Bewegung wird durch das Hebelverhältnis aus einer Bewegung mit wenig Weg und viel Kraft an der linken Seite des Schwenkhebels 208 in eine Bewegung mit viel Weg und wenig Kraft umgewandelt. Auf diese Weise wird die Kontaktierungseinheit 200 durch den Schwenkhebel 208 und den Koppelhebel 211 auf relativ kurzer Strecke in senkrechter Richtung vollständig in den Rahmen 110, 111 der Ladevorrichtung 100 zurückgezogen.

In der Darstellung der Figuren 5 und 6 ist das System voll, das heißt, bis zur maximalen Höhe ausgefahren und der kürzere Hebelarm 209 des Schwenkhebels 208 hängt einfach frei am linken Ende. Die Plattform 112 des Scherentischs 101 und die Kontaktierungseinheit 200 verfahren in diesem Bereich parallel.

Die Figuren 7, 8 und 11 zeigen jeweils eine Schnittansicht durch die Kontaktierungseinheit 200 und eine daran angefügte Aufnahmevorrichtung 300, die zu einem hier nicht dargestellten Kraftfahrzeug gehört.

Die Figur 7 zeigt diese Anordnung an der in einem Teilschnitt dargestellten Ladevorrichtung 100. Erkennbar ist, dass der Scherentisch 101 genau soweit angehoben ist, dass die aus dem Scherentisch 101 herausgefahrene Kontaktierungseinheit 200 in die in fixer Höhe an einem Kraftfahrzeug angeordnete Aufnahmevorrichtung 300 eingefügt ist.

Die Funktionsweise des hierzu vorgesehenen Mechanismus zum Anheben der Kontaktierungseinheit 200 wird durch die Schnittansicht in der Figur 11 verdeutlicht. Die Kontaktierungseinheit 200 ist auf mehreren Federn 212 gelagert und ermöglicht so den Ausgleich von Toleranzen und von nachträglichen Bewegungen des Kraftfahrzeuges besonders in Z-Richtung aber auch in X/Y-Richtung und bei Drehung um die drei Raumachsen. Mit dieser Bauart wird ein hervorragendes Verhältnis aus Gesamthöhenbedarf und Verstellbereich geschaffen. Ein Faktor von 5 bis 6 der Bauhöhe ist hier an Höhe erreichbar.

Die Federn 212 bewirken, dass die Kontaktierungseinheit 200 bereits bei geringem Anheben des Scherentischs 101 voreilend herausgedrückt wird. Zurückgehalten wird die Bewegung von dem Schwenkhebel 208, der mit seinem kürzeren Hebelarm 209 auf einem Bereich des Scherenhebels 113 aufliegt und so beim Zusammenfahren die Kontaktierungseinheit 200 auf dem letzten Stück in den Rahmen des Scherentischs 101 hereinzieht, um ihn platzsparend und vor allem geschützt zu verwahren.

Während des Ausfahrens wird die Kontaktierungseinheit 200 durch die Kraft der Federn 212 so lange heraus gedrückt bis ein Gleichgewicht zwischen Schwerkraft und Federkraft hergestellt ist. Ab diesem Zeitpunkt fährt die Kontaktierungseinheit 200 in konstantem Abstand zur Plattform 112 des Scherentischs 101. Der kürzere Hebelarm 209 hängt dabei "frei" in der Luft, so lange bis eine gewisse Höhe wieder unterschritten wird und der kürzere Hebelarm 209 aufliegt und somit die Kontaktierungseinheit 200 über den Koppelhebel 211 nach unten in die Plattform 112 hinein zieht.

Ein weiteres wesentliches Bauteil der Kontaktierungseinheit 200 ist eine Schutzmanschette 205, die zum einen vor Verschmutzung schützt und zum anderen eine Zwischenebene für die Federn 212 darstellt.

Die elektrische Anbindung der Kontaktierungseinheit 200 ist hier nicht dargestellt. Vorteilhaft ist es, hier einfach ein Kabel vorzusehen, dessen Litzen an die Kontaktringe 201 angeschlagen sind, und zwar vorzugsweise gleichmäßig auf deren Umfang verteilt. Für eine automatische X- und Y-Positionierung der Kontaktierungseinheit 200 sind verschiedene Ansätze möglich und bekannt, deren Details jedoch nicht Gegenstand dieser Beschreibung sind. Vorgesehen werden kann etwa eine automatische motorische Verstellung unter Verwendung einer Sensorsteuerung.

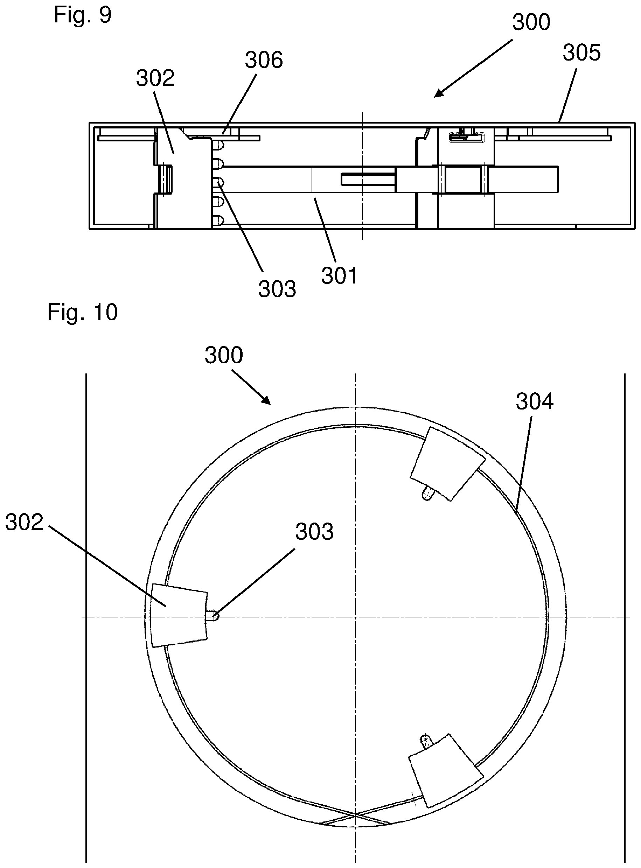

Die elektrische und mechanische Verbindung zwischen der Kontaktierungseinheit 200 und der kraftfahrzeugseitigen Aufnahmevorrichtung 300 wird durch die Figur 8 verdeutlicht. In den Figuren 9 und 10 sind Details der Aufnahmevorrichtung 300 dargestellt.

Die kraftfahrzeugseitige Aufnahmevorrichtung 300 weist ein zylinderförmiges Gehäuse 305 auf, dessen Oberseite geschlossen und dessen Unterseite eine zugängliche Aufnahmekammer 301 besitzt. Um die Aufnahmekammer 301 herum sind mindestens drei Kontaktkörper 302 symmetrisch angeordnet (Figur 10). Jeder der Kontaktkörper 302 weist mehrere übereinanderstehend angeordnete Kontaktstifte 303 auf, welche elektrische Verbindungen zu allen elektrisch belegten Kontaktringen 201 der Kontaktierungseinheit 200 herstellen können.

Die Kontaktkörper 302 sind von oben, von unten oder beidseitig auf Schienen 306 geführt (Figur 9) und werden hier beispielhaft durch einen federnden Metallstreifen 304 bewegt. Der federnde Metallstreifen 304 ist zu einem Ring geformt, dessen Durchmesser in seinem spannungsfreien Zustand deutlich größer ist als der Durchmesser der kraftfahrzeugseitigen Kontaktierungseinheit 200.

Der federnde Metallstreifen 304 zieht somit im entspannten Zustand die Kontaktkörper 302 nach außen. Wird der Metallstreifen 304 nun, angetrieben beispielsweise durch einen nicht dargestellten Elektromotor, einer Schlinge vergleichbar zusammengezogen, so werden mit der Bewegung des Metallstreifens 304 auch die Kontaktkörper 302 entlang ihrer Schienen 306 nach innen bewegt. Dadurch nähern sich die Kontaktkörper 302 einer in den Aufnahmekammer 301 eingesetzten Kontaktierungseinheit 200 an. Die Kontaktstifte 303 sind so an den Kontaktkörper 302 angeordnet, dass sie von außen an die Kontaktringe 201 der Kontaktierungseinheit 200 heranfahren (Figur 8). Die Kontaktringe 201 selber sind durch Kunststoffrippen 202 voneinander getrennt und dabei auch berührungsgeschützt nach innen versetzt.

An jedem Kontaktkörper 302 sind alle im Kabel befindlichen Leiter jeweils mit Kontaktstiften 303 verbunden. Die Kontaktstifte 303 sind auf den Kontaktkörper 302 jeweils übereinander angeordnet und federnd gelagert um eine gleichmäßige Anpresskraft an allen Kontaktringen 201 zu gewährleisten. Darüber hinaus verfügen die Kontaktkörper 302 jeweils über abgefaste Auflageflächen, die dafür sorgen, dass die Kontaktierungseinheit 200 in ihrer vertikalen Z-Position gleichmäßig eingefangen und festgehalten wird. Somit kann, sobald die mindestens drei kraftfahrzeugseitigen Kontaktkörper 302 die Kontaktierungseinheit 200 fixiert haben, das Gesamtsystem in eine Position gebracht werden in der die Kontaktierungseinheit 200 nach dem Lösen der Fixierung einfach nach unten herausfällt. Auf diese Weise ist sichergestellt, dass seitens des Kraftfahrzeugs jederzeit eine Entkopplung stattfinden kann und das Kraftfahrzeug niemals durch das Ladesystem am Wegfahren gehindert wird.

Zur Unterstützung einer solchen Notentriegelung sind an der Ladevorrichtung 100 zwei Mittel vorgesehen, durch die sie die in der Aufnahmevorrichtung 300 fixierte Kontaktierungseinheit 200 in axialer Richtung mechanisch vorspannen kann. Diese Mittel können entweder jeweils einzeln oder, wie hier dargestellt, auch in Kombination miteinander eingesetzt werden.

Als erstes Mittel dienen die Federn 212. Als ein zweites Mittel ist, ersichtlich in der Figur 6, in dem Schlitten 122, welcher zum Antrieb des Scherentisches 101 dient, ein Langloch 123 vorgesehen. Das Langloch 123 ermöglicht es, die Anordnung der Scherenhebel 113, 114 freizugeben, wodurch die Gewichtskraft des Scherentischs 101 die in der Aufnahmevorrichtung 300 fixierte Kontaktierungseinheit 200 axial vorspannt.

Ist die Kontaktierungseinheit 200 nämlich in Position gefahren und vom Kraftfahrzeug gegriffen, kann der Scherentisch 101 schon wieder ein Stück nach unten verfahren werden. Dabei werden die Federn 212 gelängt; die Kontaktierungseinheit 200 bleibt jedoch sicher in Position. Wird nun seitens der Aufnahmevorrichtung 300 am Kraftfahrzeug die Kontaktierungseinheit 200 frei gegeben, so rutscht der Scherentisch 101 im Langloch 123 (in der Darstellung der Figur 6) von rechts nach links und die Kontaktierungseinheit 200 fällt ein Stück weit herunter in die Federn 212. Dadurch ist der Aufnahmekammer 301 frei und das Kraftfahrzeug kann weggefahren werden.

### Bezugszeichen

- 100: Ladevorrichtung
- 101: Scherentisch (Hubvorrichtung)
- 110: Grundrahmen,
- 111: Oberrrahmen
- 112: Plattform
- 113, 114: Scherenhebel
- 115, 116: Festlager
- 117, 118: Loslager
- 119: Achse
- 120: Gewindespindel
- 121: Ausnehmung
- 122: Schlitten
- 123: Langloch
- 200: Kontaktierungseinheit
- 201: Kontaktringe
- 202: Kunststoffrippen
- 203: Balkon
- 204: Grundkörper
- 205: Schutzmanschette
- 208: Schwenkhebel
- 209: kürzerer Hebelarm
- 210: längerer Hebelarm
- 211: Koppelhebel
- 212: elastisches Element, Feder(n)
- 300: Aufnahmevorrichtung
- 301: Aufnahmekammer
- 302: Kontaktkörper
- 303: Kontaktstifte
- 304: federnder Metallstreifen
- 305: Gehäuse
- 306: Schienen

## Patentansprüche

1. System zum konduktiven Laden eines Kraftfahrzeugs,
aufweisend eine Ladevorrichtung (100) mit einer als Scherentisch (101) ausgebildeten motorisch verstellbaren Hubeinrichtung, die eine elektrische Kontaktierungseinheit (200) vertikal positionieren kann, und
eine an einem Kraftfahrzeug angeordnete Aufnahmevorrichtung (300) für die Kontaktierungseinheit (200),
wobei,
dass die Kontaktierungseinheit (200) zylinderförmig oder kegelstumpfförmig ausgebildet ist, und an ihrer Mantelfläche umlaufend mehrere Kontaktringe (201) aufweist,
dass die Aufnahmevorrichtung (300) eine Aufnahmekammer (301) für die Kontaktierungseinheit (200) aufweist, und
dass die Aufnahmevorrichtung (300) um die Aufnahmekammer (301) herum mehrere radial positionierbare Kontaktkörper (302) aufweist, die in einer Position die Kontaktringe (201) der in der Aufnahmekammer (301) eingefügten Kontaktierungseinheit (200) elektrisch kontaktieren und zugleich die Kontaktierungseinheit (200) innerhalb der Aufnahmekammer (301) mechanisch an der Aufnahmevorrichtung (300) fixieren,
dass die Position der Kontaktkörper (302) von einer fahrzeugseitigen Steuervorrichtung gesteuert wird,
dass die Ladevorrichtung (100) Mittel aufweist, durch die sie die in der Aufnahmevorrichtung (300) fixierte Kontaktierungseinheit (200) in axialer Richtung mechanisch vorspannen kann, **dadurch gekennzeichnet,**
**dass** die Aufnahmevorrichtung (300) über mindestens zwei und vorzugsweise drei Kontaktkörper (302) verfügt.

2. System zum konduktiven Laden eines Kraftfahrzeugs,
aufweisend eine Ladevorrichtung (100) mit einer als Scherentisch (101) ausgebildeten motorisch verstellbaren Hubeinrichtung, die eine elektrische Kontaktierungseinheit (200) vertikal positionieren kann, und
eine an einem Kraftfahrzeug angeordnete Aufnahmevorrichtung (300) für die Kontaktierungseinheit (200),
wobei,
dass die Kontaktierungseinheit (200) zylinderförmig oder kegelstumpfförmig ausgebildet ist, und an ihrer Mantelfläche umlaufend mehrere Kontaktringe (201) aufweist,
dass die Aufnahmevorrichtung (300) eine Aufnahmekammer (301) für die Kontaktierungseinheit (200) aufweist, und
dass die Aufnahmevorrichtung (300) um die Aufnahmekammer (301) herum mehrere radial positionierbare Kontaktkörper (302) aufweist, die in einer Position die Kontaktringe (201) der in der Aufnahmekammer (301) eingefügten Kontaktierungseinheit (200) elektrisch kontaktieren und zugleich die Kontaktierungseinheit (200) innerhalb der Aufnahmekammer (301) mechanisch an der Aufnahmevorrichtung (300) fixieren,
dass die Position der Kontaktkörper (302) von einer fahrzeugseitigen Steuervorrichtung gesteuert wird,
dass die Ladevorrichtung (100) Mittel aufweist, durch die sie die in der Aufnahmevorrichtung (300) fixierte Kontaktierungseinheit (200) in axialer Richtung mechanisch vorspannen kann, **dadurch gekennzeichnet,**
**dass** die Kontaktkörper (302) mechanisch mit einer elastischen Schlinge, die vorzugsweise durch einen federnden Metallstreifen (304) ausgebildet ist, miteinander verbunden sind, die durch einen Antrieb geöffnet und geschlossen werden kann.

3. System zum konduktiven Laden eines Kraftfahrzeugs,
aufweisend eine Ladevorrichtung (100) mit einer als Scherentisch (101) ausgebildeten motorisch verstellbaren Hubeinrichtung, die eine elektrische Kontaktierungseinheit (200) vertikal positionieren kann, und
eine an einem Kraftfahrzeug angeordnete Aufnahmevorrichtung (300) für die Kontaktierungseinheit (200),
wobei
dass die Kontaktierungseinheit (200) zylinderförmig oder kegelstumpfförmig ausgebildet ist, und an ihrer Mantelfläche umlaufend mehrere Kontaktringe (201) aufweist,
dass die Aufnahmevorrichtung (300) eine Aufnahmekammer (301) für die Kontaktierungseinheit (200) aufweist, und
dass die Aufnahmevorrichtung (300) um die Aufnahmekammer (301) herum mehrere radial positionierbare Kontaktkörper (302) aufweist, die in einer Position die Kontaktringe (201) der in der Aufnahmekammer (301) eingefügten Kontaktierungseinheit (200) elektrisch kontaktieren und zugleich die Kontaktierungseinheit (200) innerhalb der Aufnahmekammer (301) mechanisch an der Aufnahmevorrichtung (300) fixieren,
dass die Position der Kontaktkörper (302) von einer fahrzeugseitigen Steuervorrichtung gesteuert wird,
dass die Ladevorrichtung (100) Mittel aufweist, durch die sie die in der Aufnahmevorrichtung (300) fixierte Kontaktierungseinheit (200) in axialer Richtung mechanisch vorspannen kann, **dadurch gekennzeichnet,**
**dass** die Kontaktierungseinheit (200) durch einen zumindest zeitweise mit den Scherenhebeln (113, 114) der Hubvorrichtung (101) gekoppelten Schwenkhebel (210) in Verbindung mit einem elastischen Element (212) vorrauseilend gegenüber der Hubeinrichtung (101) verfahrbar ist.

4. System nach Anspruch 1 oder 2, **dadurch gekennzeichnet, dass** als Mittel zur Erzeugung einer Vorspannung mindestens ein elastisches Element (212), vorgesehen ist.

5. System nach Anspruch 3 oder 4, **dadurch gekennzeichnet, dass** das elastische Element (212) durch mindestens eine Feder (212) ausgebildet ist.

6. System nach Anspruch 3 oder 4, **dadurch gekennzeichnet, dass** das elastische Element (212) durch eine Verstellbewegung des Scherentischs (101) vorgespannt wird.

7. System nach einem der Ansprüche 1 bis 3, **dadurch gekennzeichnet, dass** die mechanische Vorspannung durch ein mechanisches Entkoppeln eines Scherenhebels (113) von einem den Scherentisch (101) bewegenden Schlitten (122) erzeugt wird.

8. System nach Anspruch 7, **dadurch gekennzeichnet, dass** der Schlitten (122) über ein Langloch (123) verfügt, in dem der Scherenhebel (113) gelagert ist.

## Claims

1. System for conductively charging a motor vehicle, comprising a charging device (100) with a motor-adjustable lifting device configured as a scissor table (101), which can vertically position an electrical contacting unit (200), and a receiving device (300) for the contacting unit (200), which receiving device is arranged on a motor vehicle, wherein, that the contacting unit (200) is cylindrical or frusto-conical and has a plurality of contact rings (201) running around its lateral surface,
that the receiving device (300) has a receiving chamber (301) for the contacting unit (200), and
that the receiving device (300) has several radially positionable contact bodies (302) around the receiving chamber (301), which in one position electrically contact the contact rings (201) of the contacting unit (200) inserted in the receiving chamber (301) and at the same time mechanically fix the contacting unit (200) to the receiving device (300) within the receiving chamber (301),
that the position of the contact bodies (302) is controlled by a control device on the vehicle side,
that the charging device (100) has means by which it can mechanically preload the contacting unit (200) fixed in the receiving device (300) in the axial direction,
**characterized in**
**that** the receiving device (300) has at least two and preferably three contact bodies (302).

2. System for conductively charging a motor vehicle, comprising a charging device (100) with a motor-adjustable lifting device configured as a scissor table (101), which can vertically position an electrical contacting unit (200), and a receiving device (300) for the contacting unit (200), which receiving device is arranged on a motor vehicle, wherein, that the contacting unit (200) is cylindrical or frusto-conical and has a plurality of contact rings (201) running around its lateral surface,
that the receiving device (300) has a receiving chamber (301) for the contacting unit (200), and
that the receiving device (300) has several radially positionable contact bodies (302) around the receiving chamber (301), which in one position electrically contact the contact rings (201) of the contacting unit (200) inserted in the receiving chamber (301) and at the same time mechanically fix the contacting unit (200) to the receiving device (300) within the receiving chamber (301),
that the position of the contact bodies (302) is controlled by a control device on the vehicle side,
that the charging device (100) has means by which it can mechanically preload the contacting unit (200) fixed in the receiving device (300) in the axial direction,
**characterized in**
**that** the contact bodies (302) are mechanically connected to one another by means of an elastic loop, which is preferably formed by a resilient metal strip (304), that can be opened and closed by a drive.

3. System for conductively charging a motor vehicle, comprising a charging device (100) with a motor-adjustable lifting device configured as a scissor table (101), which can vertically position an electrical contacting unit (200), and a receiving device (300) for the contacting unit (200), which receiving device is arranged on a motor vehicle, wherein, that the contacting unit (200) is cylindrical or frusto-conical and has a plurality of contact rings (201) running around its lateral surface,
that the receiving device (300) has a receiving chamber (301) for the contacting unit (200), and
that the receiving device (300) has several radially positionable contact bodies (302) around the receiving chamber (301), which in one position electrically contact the contact rings (201) of the contacting unit (200) inserted in the receiving chamber (301) and at the same time mechanically fix the contacting unit (200) to the receiving device (300) within the receiving chamber (301),
that the position of the contact bodies (302) is controlled by a control device on the vehicle side,
that the charging device (100) has means by which it can mechanically preload the contacting unit (200) fixed in the receiving device (300) in the axial direction,
**characterized in**
**that** the contacting unit (200) can be moved in advance of the lifting device (101) by means of a pivot lever (210) coupled at least temporarily to the scissor levers (113, 114) of the lifting device (101) in conjunction with an elastic element (212).

4. System according to claim 1 or 2, **characterized in that** at least one elastic element (212) is provided as the means for generating a preload.

5. System according to claim 3 or 4, **characterized in that** the elastic element (212) is formed by at least one spring (212).

6. System according to claim 3 or 4, **characterized in that** the elastic element (212) is preloaded by an adjusting movement of the scissor table (101).

7. System according to one of claims 1 to 3, **characterized in that** the mechanical preload is produced by a mechanical decoupling of a scissor lever (113) from a carriage (122) moving the scissor table (101).

8. System according to claim 7, **characterized in that** the carriage (122) has a slot (123) in which the scissor lever (113) is mounted.

## Revendications

1. Système de charge conductrice d'un véhicule automobile, présentant un dispositif de chargement (100) avec un dispositif de levage réglable par moteur, conçu comme une table à ciseaux (101), qui peut positionner verticalement une unité de contact électrique (200), et un dispositif de réception (300) disposé sur un véhicule automobile pour l'unité de contact électrique (200), dans lequel
en ce que l'unité de contact (200) est réalisée en forme de cylindre ou de tronc de cône, et présente sur sa surface d'enveloppe plusieurs anneaux de contact (201) sur tout le pourtour,
en ce que le dispositif de réception (300) présente une chambre de réception (301) pour l'unité de contact électrique (200), et
en ce que le dispositif de réception (300) présente autour de la chambre de réception (301) plusieurs corps de contact (302) pouvant être positionnés radialement, qui, dans une position, contactent électriquement les anneaux de contact (201) de l'unité de contact (200) insérée dans la chambre de réception (301) et fixent en même temps mécaniquement l'unité de contact (200) à l'intérieur de la chambre de réception (301) sur le dispositif de réception (300),
en ce que la position des corps de contact (302) est commandée par un dispositif de commande côté véhicule,
que le dispositif de chargement (100) présente des moyens par lesquels il peut précontraindre mécaniquement l'unité de contact (200) fixée dans le dispositif de réception (300) dans la direction axiale,
**caractérisé en ce que**
le dispositif de réception (300) dispose d'au moins deux et de préférence de trois corps de contact (302).

2. Système de charge conductrice d'un véhicule automobile, présentant un dispositif de chargement (100) avec un dispositif de levage réglable par moteur, conçu comme une table à ciseaux (101), qui peut positionner verticalement une unité de contact électrique (200), et un dispositif de réception (300) disposé sur un véhicule automobile pour l'unité de contact électrique (200), dans lequel
en ce que l'unité de contact (200) est réalisée en forme de cylindre ou de tronc de cône, et présente sur sa surface d'enveloppe plusieurs anneaux de contact (201) sur tout le pourtour,
en ce que le dispositif de réception (300) présente une chambre de réception (301) pour l'unité de contact électrique (200), et
en ce que le dispositif de réception (300) présente autour de la chambre de réception (301) plusieurs corps de contact (302) pouvant être positionnés radialement, qui, dans une position, contactent électriquement les anneaux de contact (201) de l'unité de contact (200) insérée dans la chambre de réception (301) et fixent en même temps mécaniquement l'unité de contact (200) à l'intérieur de la chambre de réception (301) sur le dispositif de réception (300),
en ce que la position des corps de contact (302) est commandée par un dispositif de commande côté véhicule,
que le dispositif de chargement (100) présente des moyens par lesquels il peut précontraindre mécaniquement l'unité de contact (200) fixée dans le dispositif de réception (300) dans la direction axiale,
**caractérisé en ce que**
les corps de contact (302) sont reliés mécaniquement entre eux par une boucle élastique, de préférence formée par une bande métallique élastique (304), qui peut être ouverte et fermée par un entraînement.

3. Système de charge conductrice d'un véhicule automobile, présentant un dispositif de chargement (100) avec un dispositif de levage réglable par moteur, conçu comme une table à ciseaux (101), qui peut positionner verticalement une unité de contact électrique (200), et un dispositif de réception (300) disposé sur un véhicule automobile pour l'unité de contact électrique (200), dans lequel
en ce que l'unité de contact (200) est réalisée en forme de cylindre ou de tronc de cône, et présente sur sa surface d'enveloppe plusieurs anneaux de contact (201) sur tout le pourtour,
en ce que le dispositif de réception (300) présente une chambre de réception (301) pour l'unité de contact électrique (200), et
en ce que le dispositif de réception (300) présente autour de la chambre de réception (301) plusieurs corps de contact (302) pouvant être positionnés radialement, qui, dans une position, contactent électriquement les anneaux de contact (201) de l'unité de contact (200) insérée dans la chambre de réception (301) et fixent en même temps mécaniquement l'unité de contact (200) à l'intérieur de la chambre de réception (301) sur le dispositif de réception (300),
en ce que la position des corps de contact (302) est commandée par un dispositif de commande côté véhicule,
que le dispositif de chargement (100) présente des moyens par lesquels il peut précontraindre mécaniquement l'unité de contact (200) fixée dans le dispositif de réception (300) dans la direction axiale,
**caractérisé en ce que**
l'unité de mise en contact (200) peut être déplacée en avance par rapport au dispositif de levage (101) par un levier pivotant (210) couplé au moins temporairement aux leviers de ciseaux (113, 114) du dispositif de levage (101) en liaison avec un élément élastique (212).

4. Système selon la revendication 1 ou 2, **caractérisé en ce qu'**il est prévu au moins un élément élastique (212) comme moyen de génération d'une précontrainte.

5. Système selon la revendication 3 ou 4, **caractérisé en ce que** l'élément élastique (212) est formé par au moins un ressort (212).

6. Système selon la revendication 3 ou 4, **caractérisé en ce que** l'élément élastique (212) est précontraint par un mouvement de réglage de la table de ciseaux (101).

7. Système selon l'une des revendications 1 à 3, **caractérisé en ce que** la précontrainte mécanique est générée par un découplage mécanique d'un levier de ciseaux (113) d'un chariot (122) déplaçant la table de ciseaux (101).

8. Système selon la revendication 7, **caractérisé en ce que** le chariot (122) dispose d'un trou oblong (123) dans lequel est logé le levier de ciseaux (113).
